# EUROPEAN PATENT APPLICATION

(11) **EP 1 884 666 A1**
(43) Date of publication of application: **06.02.2008**
(21) Application number: 06015950.6
(22) Date of filing: 01.08.2006
(51) Int. Cl.: F16B 21/09, F16B 37/04, F16B 41/00

(54) **Mounting receptacle and mounting arrangement**

(71) Applicant: Electrolux Home Products Corporation N.V., 1930 Zaventem (BE)
(72) Inventor: Weiser, Gerhard, 90762 Fürth (DE)
(74) Representative: Baumgartl, Gerhard Willi

(57) **Abstract**

The invention relates to a mounting receptacle for receiving and securing a mounting element (15), comprising a sheet or plate element (3) having a slot arrangement (5) and a securing element (7). The securing element (7) has an undeflected position aligned or essentially aligned in the plane of the sheet or plate element (3) and the slot arrangement (5) has a main receptacle (11) and an adjoining auxiliary receptacle (7, 9), wherein at least one dimension (a) of the main receptacle (11) is less than a dimension (b) of the auxiliary receptacle (7, 9), and wherein in the undeflected position of the securing element (7) a portion of the securing element is narrowing or blocking the passage or junction from the main receptacle (11) to the auxiliary receptacle (7, 9).

## Description

The invention relates to a mounting receptacle for receiving and securing at least one mounting element, the mounting receptacle enabling a quick installation for the mounting element in the mounting receptacle. Further, it relates to a mounting arrangement comprising the combination of mounting receptacle and mounting element for mounting a component, in particular a component of a home appliance within the home appliance structure.

In conventional mounting techniques the components, for example pre-manufactured components of a home appliance, are secured to a metal plate using a metal screw drilling and screwing it into the metal plate and thereby fixing the component. Instead of drilling and screwing the metal screw into the blank metal sheet, arrangements are known in which a hole and a specific three-dimensional structure is punched into the metal plate, such that the metal screw is fixed by screwing only. When screwing the metal screw into the metal plate, often a torque limiter is used such that over-screwing and pulling the screw out of the damaged metal hole is avoided.

It is an object of the invention to provide a mounting receptacle and mounting arrangement, in which components can be quickly fixed to a sheet or plate element using a mounting element.

The invention is defined in claims 1 and 11, respectively.

Particular embodiments are set out in the dependent claims.

According to claim 1, the mounting receptacle comprises a sheet or plate element having a slot arrangement and a securing element, wherein the slot arrangement is adapted to receive a mounting element. When the mounting element is inserted into the slot arrangement, it is secured by the securing element. Preferably, the sheet or plate element is at least a section of an element or component having a flat or nearly flat area or a region where the slot arrangement is formed. The material of the sheet or plate element may be metal, in particular stainless steel or any other metal plate, a resin plate, a plastic plate or any substrate having a flat area in which the slot arrangement is formed. By using the combination of mounting receptacle and mounting element to be inserted therein (mounting arrangement - see below), two components can be mounted or fixed to each other, wherein at least a mounting receptacle is formed on the one component and at least one mounting element is formed on the other component. In an embodiment mounting receptacles and mounting elements can be combined on one component and in a paired or matching manner mounting receptacles and mounting elements are formed on the other component.

In an undeflected position or in a rest position the securing element is aligned or essentially aligned in or to the plane or surface of the sheet or plate element and preferably the securing function of the securing element with respect to the mounting element to be inserted into the slot arrangement is exerted in this undeflected position.

The slot arrangement comprises a main receptacle and an adjoining or neighbouring auxiliary receptacle, wherein the main receptacle is adapted to receive a portion or a section of the mounting element. The cross section of the auxiliary receptacle is wider than the cross section of the main receptacle at least in one dimension, such that the mounting element to be inserted into the slot arrangement can be first inserted into the auxiliary receptacle with a portion of the mounting element which is larger than a waist or tapered portion of the mounting element. Once inserted in the auxiliary receptacle, the mounting element can be shifted into the main receptacle with its waist or tapered portion. When the mounting element to be inserted is moved into the main receptacle, it is secured by the securing element being in its undeflected or rest position. In its rest or undeflected position the securing element narrows or at least partially blocks the junction or passage from the main receptacle to the auxiliary receptacle. Thus, the mounting element once inserted into the main receptacle is prevented from moving or gliding to the auxiliary receptacle and escaping therefrom. Therefore, the mounting receptacle provides a means for quickly inserting a mounting element and securing it therein without the use of tools or any special care during mounting or securing the mounting element to the mounting receptacle.

Preferably, the securing element is elastically deflectable from its rest or undeflected position, such that by pressing the mounting element to be inserted into the mounting receptacle the securing element is temporarily deflected. When the mounting element is shifted from the auxiliary receptacle to the main receptacle, the deflected and released securing element deflects back into its undeflected or rest position. Mounting the mounting element in the mounting receptacle does thereby not require any additional mounting action onto the mounting receptacle (i.e. the securing element). This allows a simple mounting even at inaccessible mounting locations.

Preferably, resistance against insertion of the at least one mounting element into the auxiliary receptacle is minimized, when the main deflection direction of the securing element is perpendicular to the plane of the sheet or plate element (or to the essentially flat section surrounding the mounting receptacle). Elastic resistance against inserting the mounting element can even be lowered, when the base width of the securing element is smaller than its tip width, wherein the base is fixed or connected to the sheet or plate element and the tip region of the securing element is blocking or narrowing the escape of the mounting element from the main receptacle.

For increasing the retention force of the inserted mounting element in the main receptacle, the ratio of the cross section of the auxiliary receptacle to the cross section of the main receptacle is more than 1.2, preferably more than 1.4, such that a correspondingly widened insertion portion of the mounting element can be inserted through the auxiliary receptacle and from there be moved behind the main receptacle, where the widened insertion portion of the mounting element provides the retention force. Preferably, the cross section dimension ratio refers to the cross section perpendicular to the insertion direction for inserting the mounting element from the auxiliary receptacle to the main receptacle.

In a preferred embodiment the slot arrangement is punched into the sheet or plate element, for example at the same time when punching and/or bending a component formed by the sheet or plate element. Or the slot arrangement is the negative part of a cast used for molding a component having the sheet or plate area, such that no additional manufacturing step is required to form the slot arrangement.

Reference is made in detail to a preferred embodiment of the invention, an example of which is illustrated in the accompanying drawings. The drawings show:
- Fig. 1A-1C: a top view of a mounting arrangement, in which a mounting pin is successively inserted into a holding slot,
- Fig. 2: a lateral view of the mounting pin shown in cross section in Fig. 1A, and
- Fig. 3: a lateral cross section of an alternative embodiment of the mounting pin shown in Fig. 2.

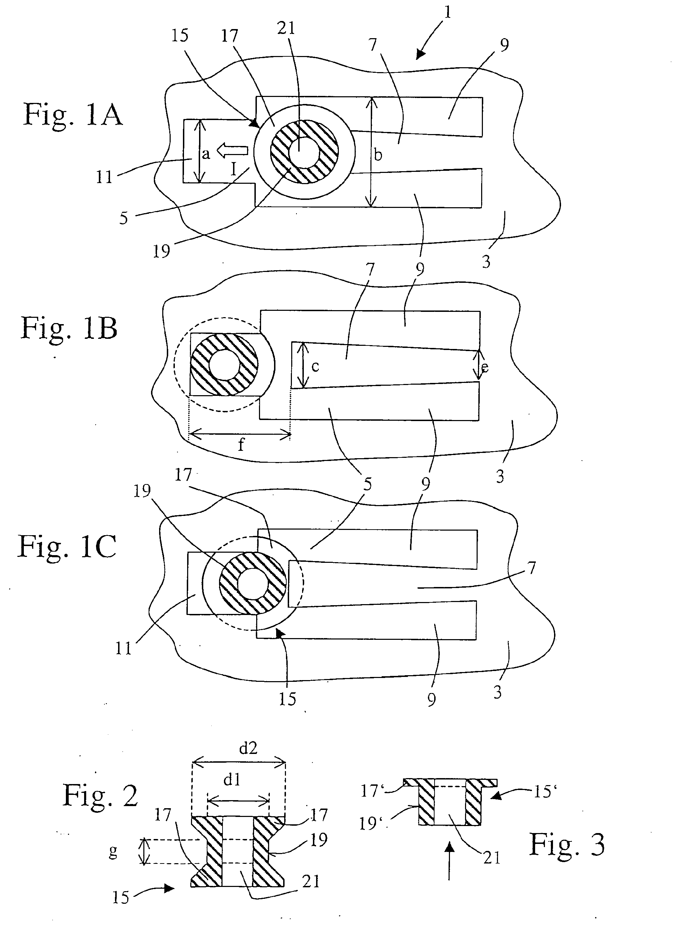

Fig. 1A to 1C show a top view of a mounting arrangement 1, wherein a sheet 3 or plate is partially shown. The sheet 3 may be a flat region of a component or the like. In the section of the sheet 3 shown in Figs. 1A to 1C a slot arrangement 5 is formed by punching the metal sheet 3. Preferably, the inner and outer edges of the slots are round according to the needs of punching or cutting (if cutting is used, to form the slot arrangement 5). The slot arrangement 5 has an elastic tongue element 7, which is laterally confined by two lateral slots 9 running in parallel to the tongue element 7. A central slot 11 is facing the free tip of the tongue element 7 and communicates with the two lateral slots 9, such that the tip end of the tongue element 7 is freestanding and the base end of the tongue element 7 is connected to the sheet 3. As shown in Fig. 1B, the width c of the tip end of the tongue element 7 is wider than the base width e of the tongue element where it connects to the sheet 3.

Fig. 1A to 1C show the sequence of inserting and fixing a mounting pin 15 in the mounting arrangement 1. In Fig. 1A the mounting pin 15 is positioned over the tip area of tongue element 7. In this position the mounting pin 15 is pressed downward from above, such that it moves down against the elastic force of the tongue element 7. As shown in the lateral cross section of Fig. 2, the mounting pin 15 has an extended or widened ledge section 17 and a tapered waist section 19. When in the position of Fig. 1A the tongue element 7 has been bent downward enough, such that the upper rim section 17 has passed the thickness of the sheet 3 (the waist section 19 is approximately centred to the depth extension of the sheet 3), the mounting pin 15 can be moved from the tongue element 7 into the central slot 11 (left-to-right movement I as shown in Fig. 1A) until the periphery of the waist section 19 abuts at the outer left edge or central slot 11. During this movement the outer edge of the right ledge section 17 passes the tip end of tongue element 7, such that tongue element 7 is released from the mounting pin 15 and deflects backward into its undeflected state, where it is aligned with the plane of the sheet 3. This state is shown in Fig. 1B. As shown in Fig. 1C, when the tongue element 7 has returned to its undeflected rest position, the movement of the mounting pin 15 in the direction of the tongue element is restricted by the free end of the tongue element 7, the tongue element thereby taking a securing function. At the same time the mounting pin 15 can not be moved out of the central slot 11 in a movement perpendicular to the plane of sheet 3, as the ledge section 17 stops the perpendicular movement - at least when the clearance of the axial movement of mounting pin 15 in the central slot 11 is overcome.

Fig. 2 indicates the outer shape of the mounting pin 15, wherein the height of the waist section 19 is g, which is wider than or equal to the thickness of sheet 3 (plus clearance height). The diameter d2 of the ledge section 17 is smaller (at least by a clearance) than the distance b between the outer edges of the lateral slots 9 (see Fig. 1A), but the diameter d2 of the ledge section 17 is wider than the width a of the central slot 11. The diameter d1 of the waist section 19 is smaller than the width a of the central slot 11. Further, the width between the left edge of the central slot 11 and the tip edge of tongue element 7 is at least f≥(d1+d2)/2. Due to this value f the clearance is enough, such that the tongue element 7 can snap back into its rest position, when the mounting pin 15 is moved from the position in Fig. 1A to the position in Fig. 1B along arrow I shown in Fig. 1A. In a preferred embodiment the cross section of central slot 11 at the left side as shown in Fig. 1A is a semi-circle having a diameter somewhat wider than diameter d1. A threaded hole 21 is formed in the mounting pin 15, such that the mounting pin can be screwed to a component to be mounted on sheet 3.

Fig. 3 shows a lateral cross section of a further embodiment of a mounting pin 15' having a ledge section 17' in the form of a ring-like extension adjoining the waist section 19'. The lower limitation of the mounting pin 15, i.e. the restricting element preventing a falling down of the mounting pin 15' from the central slot 11 when inserted, is a surface of the component (not shown) to which the mounting pin 15' is screwed.

### REFERENCE NUMERAL LIST

- 1: mounting arrangement
- 3: sheet
- 5: slot arrangement
- 7: tongue element
- 9: lateral slot
- 11: central slot
- 15, 15': mounting pin
- 17, 17': ledge section
- 19, 19': waist section
- 21: threaded hole

## Claims

1. Mounting receptacle for receiving and securing a mounting element (15, 15'), comprising:
a sheet or plate element (3) having a slot arrangement (5) and a securing element (7),
wherein the securing element (7) has an undeflected position aligned or essentially aligned in the plane of the sheet or plate element (3),
wherein the slot arrangement (5) has a main receptacle (11) and an adjoining auxiliary receptacle (7, 9),
wherein at least one dimension (a) of the main receptacle (11) is less than a dimension (b) of the auxiliary receptacle (7, 9), and
wherein in the undeflected position of the securing element (7) a portion of the securing element is narrowing or blocking the passage or junction from the main receptacle (11) to the auxiliary receptacle (7, 9).

2. Mounting receptacle according to claim 1, wherein the securing element (7) is elastically deflectable.

3. Mounting receptacle according to claim 1 or 2, wherein the securing element (7) is elastically deflectable at least or substantially in a direction perpendicular to the plane of the sheet or plate element (3).

4. Mounting receptacle according to claim 1, 2 or 3, wherein the securing element (7) is a tongue element.

5. Mounting receptacle according to any of the previous claims, wherein the base width (e) of the securing element (7) is smaller than its tip width (c).

6. Mounting receptacle according to any of the previous claims, wherein the securing element (7) is formed of a portion of the sheet or plate element (3).

7. Mounting receptacle according to any of the previous claims, wherein the ratio of the dimension (b) of the auxiliary receptacle (7, 9) to the at least one dimension (a) of the main receptacle (11) is more than or equal to 1.2, preferably more than or equal to 1.4, more preferably more than or equal to 1.7.

8. Mounting receptacle according to any of the previous claims, wherein the ratio of the length of the securing element (7) to the dimension (b) of the auxiliary receptacle (7, 9) is more than or equal to 1.8, preferably more than or equal to 2.5, more preferably more than or equal to 3.

9. Mounting receptacle according to any of the previous claims, wherein the slot arrangement (5) and/or the securing element (7) is formed by punching, cutting or casting the sheet or plate element (3).

10. Mounting receptacle according to any of the previous claims, wherein a main extension direction of the securing element (7) is parallel or perpendicular to a direction (I) of insertion of a mounting element (15, 15') into the main receptacle (5).

11. Mounting arrangement comprising at least one mounting receptacle according to any of the previous claims and at least one mounting element (15, 15').

12. Mounting arrangement according to claim 11, wherein the mounting element (15, 15') has a waist section (19, 19').

13. Mounting arrangement according to claim 12, wherein a cross section or a diameter (d1) of the waist section (19, 19') is less than the dimension (a) of the main receptacle (11).

14. Mounting arrangement according to claim 11, 12 or 13, wherein the mounting element (19, 19') has at least one ledge section (17, 17') or widening end.

15. Mounting arrangement according to any of claims 11 to 14, wherein a cross section or a diameter (d2) of the ledge section (17, 17') or the extending end is more than the dimension (a) of the main receptacle (11) and less than the dimension (b) of the auxiliary receptacle (7, 9).

16. Mounting arrangement according to any of claims 11 to 15, wherein the mounting element (15, 15') has a bore or threaded bore (21).

17. Mounting arrangement according to any of claims 11 to 15, wherein at least one mounting element (15, 15') is integrally formed with a component to be mounted at the at least one mounting receptacle and/or is molded or adhered to the component.

18. Mounting arrangement according to any of claims 11 to 14, wherein a cross section of the main receptacle (11) is at least partially adapted to the cross section of the waist section (19, 19') of the mounting element (15, 15').

19. Home appliance, in particular washing machine, dryer or oven, comprising at least one sheet or plate element (3) having a.mounting receptacle according to any of claims 1 to 10 or a mounting arrangement according to any of claims 11 to 18.
